(19) **Europäisches Patentamt / European Patent Office / Office européen des brevets**

(11) **EP 3 599 314 B1**

(12) **EUROPEAN PATENT SPECIFICATION**

(45) Date of publication and mention
of the grant of the patent:
**19.03.2025 Bulletin 2025/12**

(21) Application number: **19188023.6**

(22) Date of filing: **14.05.2012**

(51) International Patent Classification (IPC):
*E02F 9/26* (2006.01)     *E02F 9/24* (2006.01)
*H04Q 9/00* (2006.01)     *G05B 23/02* (2006.01)
*G07C 5/08* (2006.01)

(52) Cooperative Patent Classification (CPC):
**E02F 9/267; G05B 23/0264; G07C 5/0816;
H04Q 9/00;** H04Q 2209/823

(54) **SHOVEL AND MONITORING DEVICE FOR A SHOVEL**

SCHAUFEL UND ÜBERWACHUNGSVORRICHTUNG DERSELBEN

PELLE ET SON DISPOSITIF DE SURVEILLANCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.05.2011 JP 2011109437**

(43) Date of publication of application:
**29.01.2020 Bulletin 2020/05**

(62) Document number(s) of the earlier application(s) in
accordance with Art. 76 EPC:
**12784997.4 / 2 711 471**

(73) Proprietor: **Sumitomo Heavy Industries, Ltd.
Tokyo 141-6025 (JP)**

(72) Inventor: **TSUKANE, Kaoru
Yokosuka-shi
Kanagawa 237-8555 (JP)**

(74) Representative: **Emde, Eric
Wagner & Geyer Partnerschaft mbB
Patent- und Rechtsanwälte
Gewürzmühlstrasse 5
80538 München (DE)**

(56) References cited:
**WO-A1-2010/021042    WO-A2-2004/038643
JP-A- 2000 096 630    JP-A- 2002 332 664
JP-A- 2005 113 397    JP-A- 2009 202 689
US-A1- 2010 123 779**

## Description

Technical Field

The present invention relates to a shovel capable of determining an operational abnormality and a monitoring device for the shovel capable of determining an operational abnormality.

Background Art

A failure determination method for construction equipment, based on a detection value detected by a sensor mounted on the construction equipment, has been known (see JP 2002 332664 A) . Failure information is sent to a center, and therefore a failure diagnosis procedure is extracted in the center, based on the sensor detecting an abnormal value. An operator of the construction equipment conducts a failure diagnosis in accordance with the failure diagnosis procedure.
JP 2005 113397 A discloses that a camera picture signal provided from a camera, communication information provided from a communication device, and vehicle state information provided from various sensors, are inputted to a control device of a hydraulic excavator. Abnormal information likely to cause failure of a vehicle, is acquired when exceeding a reference value in a comparing part among signals from the sensors. When the abnormal information is outputted from the comparing part, the abnormal information is automatically displayed on a monitor.
JP 2000 096630 A discloses a start-up inspection device for precisely performing the start-up inspection of various control apparatuses for automatic operative construction equipment. This device makes a construction machine repeatedly perform a series of instructed operations by regenerating operation. This device is provided with data measurement timing designation means for designating the timing of measuring data of various control apparatuses of automatic operative construction machines, an abnormal state judgment means for judging the abnormal state on the basis of the data of various control apparatuses for performing the automatic operation measured at the timing designated by the data measurement designation means, and a state display means of displaying the judgment result by the abnormal state judgment means.
WO 2004/038643 A2 discloses a diagnostic system for assisting in the diagnosis of a malfunction and other errors in manufacturing machinery is disclosed wherein a plurality of sensors are associated with the machinery at monitoring zones for detecting errors and generating sensor signals representing the errors. The system includes a central control unit having a computer processor in communication with a computer readable medium with a permanent memory. A temporary computer memory communicates with the processor, and a plurality of video cameras are located at the monitoring zones associated with specific sensors. The processor is in communication with the cameras for receiving video output depicting the operation of the manufacturing process continuously in real time. A set of computer readable instructions are embodied within the computer readable medium executable by the processor including set-up instructions for receiving input selecting a first preset duration for a pre-event video and a second preset duration for a post-event video from said video cameras, receiving input selecting machine sensors and cameras triggering and producing the pre-event and post-event videos for the trigger signals, Operating instructions executable by the processor are embodied in computer readable code in the computer medium for continuously storing video output in the temporary memory, continuously receiving available sensor signals, processing the sensor signals to determine if a trigger signal is required, and continuing the preceding operating instructions if a trigger signal is not required. Upon occurrence of a trigger signal the processor executes instructions copying video from the temporary memory into the permanent memory to provide the pre-event video, and begin the recording of the post-event video and storing the post-event video in the permanent memory after completion.

Summary of Invention

Problems to be Solved by Invention

In some cases, it is difficult to specify the cause of failure only by performing a diagnosis based on the detection value of the sensor and following the failure diagnosis procedure even when the failure diagnosis procedure is provided. Particularly, an attachment, such as a boom, and a cabin are mounted on a revolving superstructure of a shovel. Thus, motion not only in a front-rear direction but also in a right-left direction is carried out in the shovel. Since a working range of the shovel is extensive as described above, a situation in which the shovel encounters failure is likely to occur. An object of the invention is to provide a shovel which enables an operator to easily specify the cause of failure by making the operator confirm the circumstances at the time of failure and a monitoring device of the shovel.

Means of Solving Problems

According to an aspect of the invention, there is provided a shovel as set forth in claim 1. According to another aspect of the present invention, there is provided a monitoring device for a shovel as set forth in claim 5. Preferred embodiments of the present invention may be gathered from the dependent claims.

Advantageous Effects of Invention

It is possible to investigate the cause of abnormality using image data at the time where an operation state is determined to be abnormal.

Brief Description of Drawings

FIG. 1A and FIG. 1B are a side view and a plan view, respectively, of a shovel according to an embodiment 1.
FIG. 2 is a block diagram of the shovel according to the embodiment 1.
FIG. 3 is a flowchart showing a process of an image capture control device of the shovel according to the embodiment 1.
FIG. 4 is a flowchart showing a process of a control device of the shovel according to the embodiment 1.
FIG. 5 is a view showing an example of an image displayed on an output device of the shovel according to the embodiment 1.
FIG. 6 is a flowchart showing a process of a control device of a shovel according to an embodiment 2.
FIG. 7 is a chart showing an example of a detection value detected by a sensor.
FIG. 8 is a view showing an example of an image displayed on an output device of the shovel according to the embodiment 2.
FIG. 9 is a block diagram of a shovel and a monitoring device according to an embodiment 3.
FIG. 10 is a flowchart showing a process of a control device of the shovel according to the embodiment 3.
FIG. 11 is a block diagram of a shovel and a monitoring device according to an embodiment 4.
FIG. 12 is a flowchart showing a process of a control device of the monitoring device according to the embodiment 4.

Description of Embodiments

[Embodiment 1]

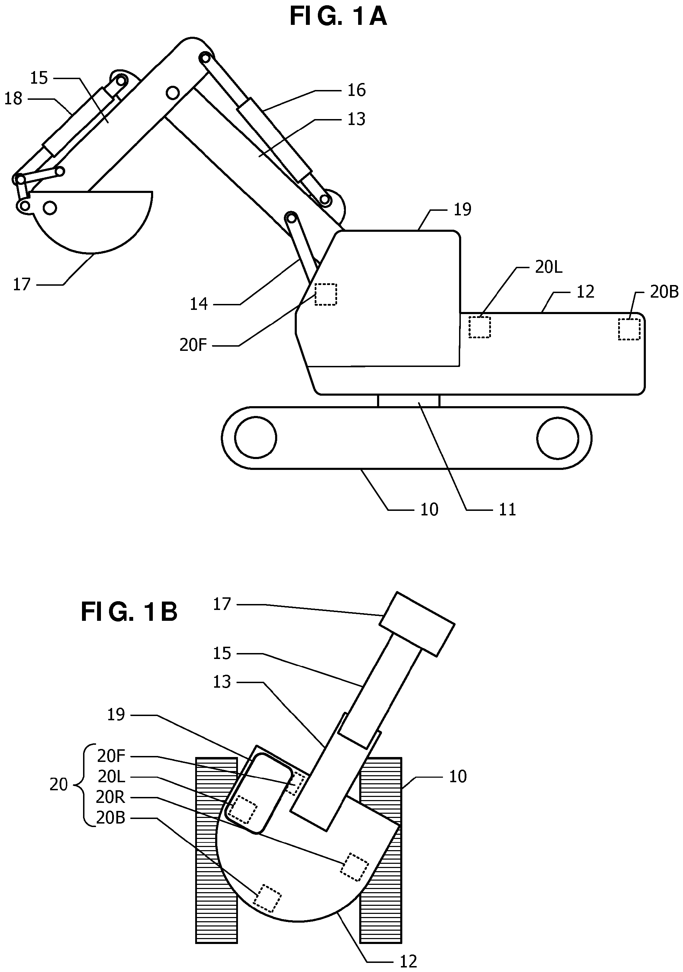

FIG. 1A and FIG. 1B are a side view and a plan view, respectively, of a shovel according to an embodiment 1. A hydraulic shovel exemplifies a shovel, in the embodiment 1. However, the embodiment 1 can be adopted to other shovels, such as a hybrid shovel or an electric shovel.

An upper revolving superstructure 12 is mounted to an undercarriage 10 via a revolving bearing 11. The upper revolving superstructure 12 revolves clockwise or counter-clockwise with respect to the undercarriage 10. A boom 13 is installed on the upper revolving superstructure 12. An arm 15 is connected to a tip of the boom 13. A bucket 17 is connected to a tip of the arm 15. The boom 13 is driven by a hydraulic cylinder 14. The arm is driven by a hydraulic cylinder 16. The bucket 17 is driven by a hydraulic cylinder 18. Furthermore, a cabin 19 is mounted to the upper revolving superstructure 12, and a driver gets into the cabin 19 and operates a hydraulic shovel.

An imaging device 20 is mounted to the upper revolving superstructure 12. A frontward imaging device 20F, a right imaging device 20R, a left imaging device 20L and a backward imaging device 20B constitute the imaging device 20. The frontward imaging device 20F, the right imaging device 20R, the left imaging device 20L and the backward imaging device 20B respectively image front, right, left and back sides of the upper revolving superstructure 12. The frontward imaging device 20F is mounted between the cabin 19 and the boom 13, for example. An omnidirectional image can be obtained by combining images obtained by these imaging devices.

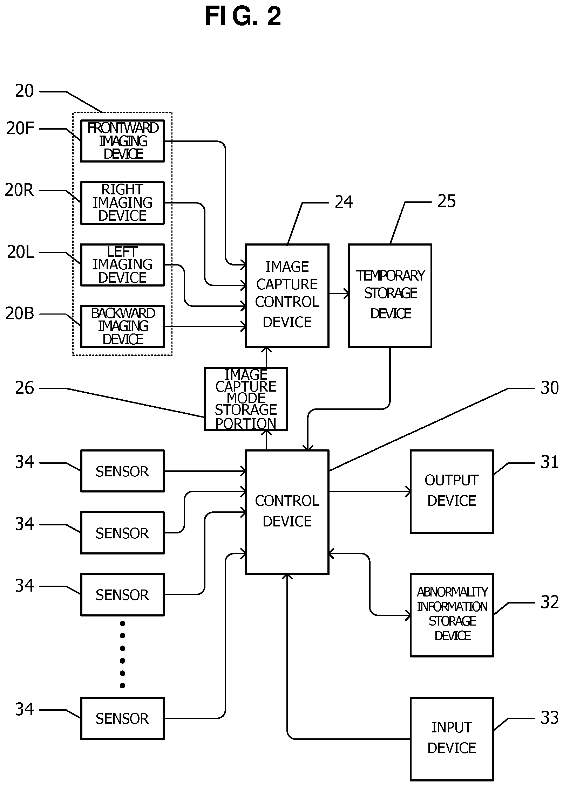

FIG. 2 shows a block diagram of an abnormality determination function of the shovel. An image capture control device 24 stores image data acquired by the imaging device 20 in a temporary storage device 25 at a predetermined cycle. The temporary storage device 25 has a ring buffer structure, for example. In other words, the oldest image data are overwritten (replaced) with new image data when no free storage area remains.

Information that specifies a capturing method of the image data, such as resolution and a capturing cycle, is stored in an image capture mode storage portion 26. A parameter for specifying the resolution is set to any one of a "high resolution", a "normal resolution" and a "low resolution", for example. A parameter for specifying the capturing cycle is set to any one of a "long cycle", a "normal cycle" and a "short cycle". An image capture mode is determined by the resolution and the capturing cycle. An operator operates an input device 33 to input the image capture mode to a control device 30. Then, the image capture mode is set to the image capture mode storage portion 26. An image capture cycle is about several hundred ms to 1 sec, for example.

The image capture control device 24 stores image data acquired by the imaging device 20, based on the image capture mode set to the image capture mode storage portion 26, in the temporary storage device 25. By decreasing image resolution or lengthening the capturing cycle, it is possible to store a long term image data in the temporary storage device 25. On the contrary, by increasing the image resolution and shortening the capturing cycle, it is possible to increase an information amount of image data in a predetermined time.

A plurality of sensors 34 are installed on the shovel. The sensors 34 detect physical quantities relating to an operation state of the shovel. An engine speed, a radiator coolant temperature, a fuel temperature, an atmospheric pressure, an engine oil pressure, a boost temperature, an intake temperature, a hydraulic operating fluid temperature, a boost pressure, a battery voltage, a hydraulic pressure of each part, a machine operation time, a traveling operation time, a revolving operation time, an idle time and the like are exemplified as the physical quantities relating to the operation state.

The control device 30 controls the temporary storage device 25, the image capture mode storage portion 26, an output device 31, and an abnormality information storage device 32. Instructions of an operator are input to the control device 30 via the input device 33. The detection values detected by the sensors 34 are input to the control device 30. A liquid crystal display device is adopted as the output device 31, for example. A touch-panel type liquid crystal display device may be adopted as a device functioning as the output device 31 and the input device 33.

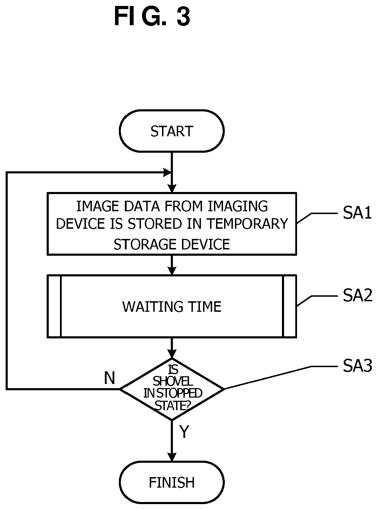

FIG. 3 shows a flowchart of an operation of the image capture control device 24. When an engine start key of the shovel is turned on, the image data is acquired from the imaging device 20 in step SA1. The resolution of the image data is converted so as to be the resolution specified in the image capture mode, and then the converted image data is stored in the temporary storage device 25. When a free area for storing the image data does not remain, the oldest image data are overwritten with new image data.

In step SA2, a period of a capturing cycle specified in the image capture mode elapses. Then, whether or not the start key of the shovel is in a stopped state is determined in step SA3. When the start key of the shovel is in a stopped state, the process is finished. When the start key of the shovel is not in a stopped state, the process returns to step SA1.

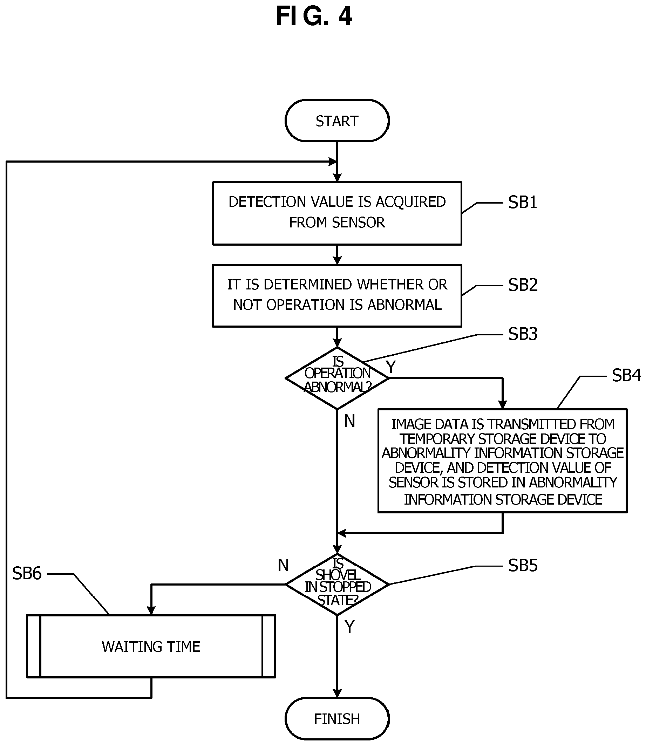

FIG. 4 shows a flowchart of an operation of the control device 30. When the engine start key of the shovel is turned on, the detection values detected by the sensors 34 are acquired in step SB1. Whether or not the acquired detection values are within an allowable range is determined in step SB2. The allowable range is preset for each physical quantity relating to the operation state.

Whether or not the operation state is abnormal is determined in step SB3. When at least one of the detection values is out of the allowable range, the operation state of the shovel is determined to be abnormal. When all the detection values are within the allowable range, the operation state is determined to be normal. When the operation state is determined to be normal, whether or not the shovel is in a stopped state is determined in step SB5. When the operation state is determined to be abnormal, step SB4 is executed. Then, whether or not the shovel is in a stopped state is determined in step SB5.

Hereinafter, a process of step SB4 will be described. Among the image data stored in the temporary storage device 25, the image data which corresponds to a period from a first time prior to a time at which the operation is determined to be abnormal to the present is read out and stored in the abnormality information storage device 32. Furthermore, the detection value of each sensor 34 at the time when the operation is determined to be abnormal is stored in the abnormality information storage device 32. The stored image data and the detection value of the sensor 34 are associated with each other. The image data and the detection value of the sensor 34 may be associated with each other, based on indices given thereto, for example. In addition, the image data and the detection value of the sensor 34 may be associated with each other, based on the time at which the data is acquired.

Furthermore, in addition to the image data corresponding to a period prior to the time at which the operation is determined to be abnormal, image data corresponding to a period after that time may be stored in the abnormality information storage device 32. At a second time following the time at which the operation is determined to be abnormal, the image data corresponding to a period from the first time to the second time may be transmitted from the temporary storage device 25 to the abnormality information storage device 32 after waiting for the image data transmission until the second time, for example. A period from the first time to the time at which the operation is determined to be abnormal is set to about 30 sec to 5 min, and a period from the time at which the operation is determined to be abnormal to the second time is set to about 10 sec to 1 min.

Furthermore, an alarm may be raised from the output device 31 to inform an operator that the operation state is abnormal.

When, in step SB5, it is determined that the shovel is in a stopped state, the process is finished. When it is determined that the shovel is not in a stopped state, the process returns to step SB1 after a predetermined time elapses in step SB6. The waiting time of step SB6 is set to several hundred ms to 1 sec, for example.

In the embodiment 1, the image data corresponding to a period before the time at which the operation is determined to be abnormal or a period before and after the time is stored in the abnormality information storage device 32. The image data is useful in specifying the cause of abnormality. When any abnormality occurs in the shovel, it is possible for a maintenance person to search for the cause of the abnormality by operating the input device 33 (see FIG. 2).

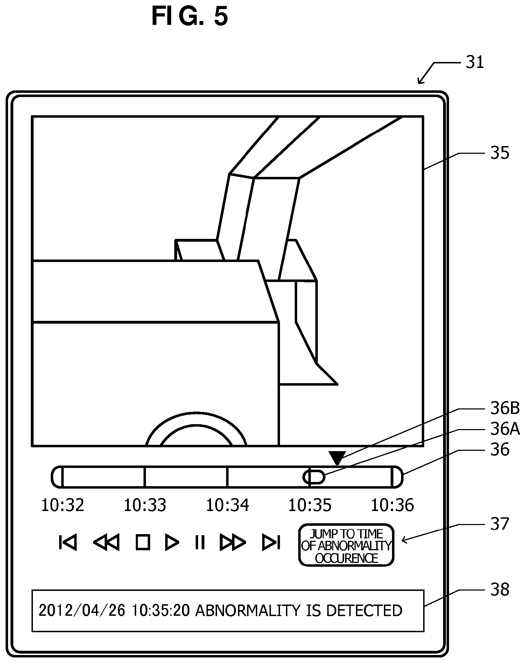

FIG. 5 is a view showing an example of an image displayed on the output device 31 at the time of searching for the cause of abnormality. An image display window 35, a progress status bar 36, operating icons 37 and a character information display window 38 are shown in a display screen. A display screen when it is determined that an abnormality has occurred at the time of 10:35:20 on April 26, 2012 is exemplarily shown in FIG. 5.

The progress status bar 36 shows a period from a data collection start time of the image data stored in the abnormality information storage device 32 (see FIG. 2) to a finish time. When a slider 36A displayed in the progress status bar 36 is slid, an image at the time corresponding to the position of the slider 36A is displayed on the image display window 35. A mark 36B for indicating abnormality occurrence time is displayed on the progress status bar 36 at the position corresponding to a time of abnormality occurrence. The progress status bar 36 and the slider 36A function as a time indicator by which the time of the image to be displayed on the image display window 35 is indicated. The length of the progress status bar 36 corresponds to a time range within which the time can be specified by the slider 36A. A numeric input window used for inputting a time as a numeric value may be displayed as a time indicator, instead of the slider 36A.

A playback, a frame-by-frame playback, a pause or the like of moving image can be carried out by operating the operating icon 37. In addition, the operating icon 37 includes an instruction button used for jumping to the time of abnormality occurrence. When the instruction button is operated, the image at the time when the operation is determined to be abnormal in step SB2 shown in FIG. 4 is displayed on the image display window 35. It is possible to quickly display the image at the time immediately before the time of abnormality occurrence, by providing the instruction button used for jumping to the time of abnormality occurrence.

FIG. 5 shows an example of an image at the time when the hydraulic abnormality is detected. It is possible to know that a truck intrudes between the upper revolving superstructure 12 and the bucket 17 (see FIGs. 1A and 1B), from the image shown in FIG. 5. Here, the following estimation can be carried out. The truck is in contact with hydraulic piping, and thus the hydraulic piping is broken. Therefore, a hydraulic abnormality is detected. In this way, it is possible to specify the cause of the abnormality by inspecting the image data corresponding to a period before and after the time at which the abnormality occurs.

[Embodiment 2]

A functional block diagram of a shovel according to an embodiment 2 is the same as the functional block diagram of the shovel according to the embodiment 1 shown in FIG. 2.

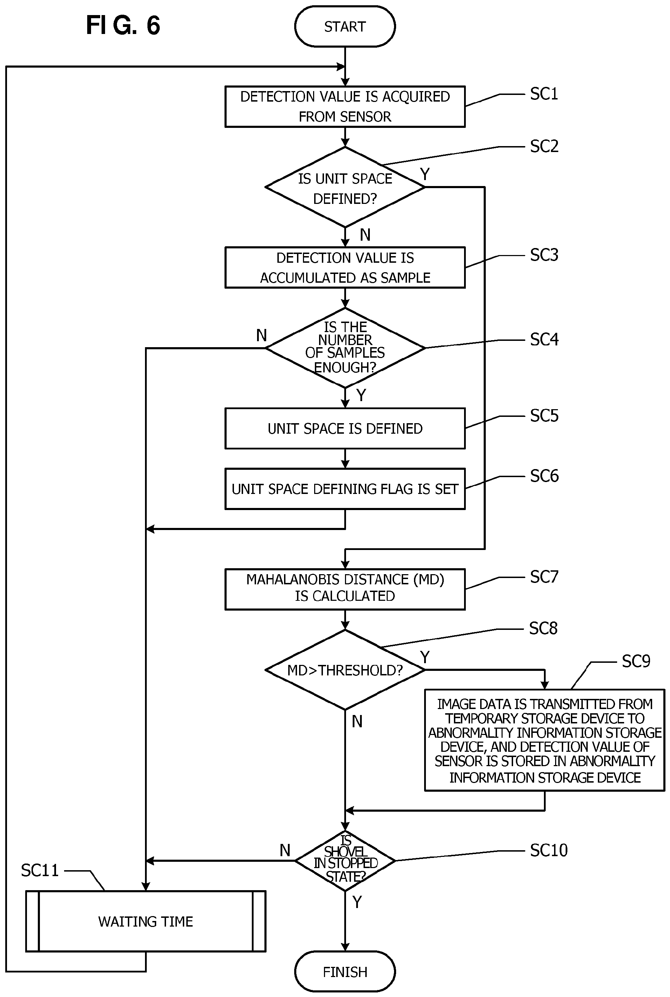

FIG. 6 is a flowchart showing an operation of the control device 30 (see FIG. 2) of the shovel according to the embodiment 2. The control device 30 of the shovel according to the embodiment 2 includes a unit space defining flag and an area for storing the inverse matrix of a correlation matrix.

The detection value is acquired from the sensor 34 (see FIG. 2), in step SC1. Whether or not the unit space is defined is determined in step SC2. Specifically, it is determined whether the unit space defining flag is set to "defined" or "undefined", in step SC2. The unit space is used as a reference for determination when the abnormality determination using Mahalanobis-Taguchi method is carried out in the following step. When the unit space is undefined, the detection value of the sensor 34 is accumulated as a sample, in step SC3. Whether or not the number of accumulated samples is enough is determined in step SC4. When the number of samples is enough, the unit space is defined in step SC5. Specifically, the correlation matrix of physical quantities of samples which constitute the unit space and the inverse matrix of the correlation matrix are calculated.

Hereinafter, a method of defining the unit space will be described.

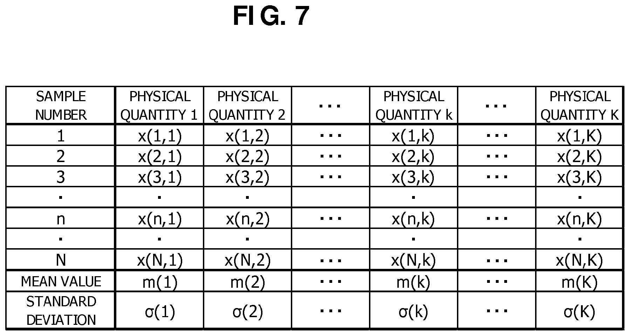

FIG. 7 shows an example of the detection values detected by the sensor 34. The number of physical quantities of a detection target is represented by K, and the number of accumulated samples is represented by N. The detection values of N samples constitute the unit space. In a sample to which the sample number n is assigned, the detection value of a physical quantity k is indicated as $x(n, k)$. The mean value and the standard deviation are calculated with respect to the detection values of each physical quantity. The mean value and the standard deviation of the physical quantity k are indicated as $m(k)$ and $\sigma(k)$, respectively.

The detection values of each sample are standardized, whereby standardized detection values are calculated. The standardized detection value $X(n,k)$ of the detection value $x(n,k)$ of the physical quantity k in the sample to which the sample number n is assigned is shown as the following Equation.

[Equation 1]

$$X(n,k) = \frac{x(n,k) - m(k)}{\sigma(k)}$$

Correlation coefficients between the physical quantities are calculated based on the standardized detection values X (n, k) . A correlation coefficient r(i,j) of a physical quantity i and a physical quantity j is calculated by the following Equation.

[Equation 2]

$$r(i, j) = \frac{1}{N} \sum_{l=1}^{N} X(l,i) X(l,j)$$

A correlation matrix R of the physical quantities 1 to K is shown as the following Equation.

[Equation 3]

$$R = \begin{pmatrix} 1 & r(1,2) & \cdots & r(1,K) \\ r(2,1) & 1 & \cdots & r(2,K) \\ \vdots & \vdots & \ddots & \vdots \\ r(K,1) & r(K,2) & \cdots & r(K,K) \end{pmatrix}$$

An inverse matrix A of the correlation matrix R is calculated. The inverse matrix A is stored in the control device 30 so as to be available in the following step.

In step SC6, the unit space defining flag is set to "defined". In the case where the number of samples is determined to be not enough in step SC4, or after the unit space defining flag is set to "defined" in step SC6, the process waits for a predetermined time in step SC11. The waiting time is set to about several hundred ms to 1 sec, for example. After waiting for the predetermined time, the process returns to step SC1.

Furthermore, the unit space defining flag can be reset by the operation of an operator. In other words, it is possible to set the unit space defining flag to "undefined".

When, in step SC2, the unit space is determined to be defined, a Mahalanobis distance (MD) of the detection values (verification data) detected by each sensor 34 is calculated in step SC7. Hereinafter, a calculation method of the Mahalanobis distance will be described.

The value of a physical quantity k, out of K detection values (verification data) detected by the sensors 34, is indicated as y(k). The detection value y(k) is standardized, whereby a standardized detection value Y(k) is calculated. The standardized detection value Y(k) can be calculated by the following Equation.

[Equation 4]

$$Y(k) = \frac{y(k) - m(k)}{\sigma(k)}$$

The square (D²) of the Mahalanobis distance of the verification data can be calculated by the following Equation using the inverse matrix A of the correlation matrix R.

[Equation 5]

$$D^2 = \frac{1}{K}\begin{pmatrix} Y(1) & Y(2) & \cdots & Y(K) \end{pmatrix} A \begin{pmatrix} Y(1) \\ Y(2) \\ \vdots \\ Y(K) \end{pmatrix}$$

When the Mahalanobis distance MD (or the square D² of the Mahalanobis distance) is calculated, the Mahalanobis distance MD and a threshold are compared in step SC8. The threshold is set in advance. The threshold is set to 2, for example. When the threshold is compared to the square D² itself of the Mahalanobis distance defined in Equation described above, the threshold is set to 2²=4. When the Mahalanobis distance MD is greater than the threshold, the process of step SC9 is to start. The process of step SC9 is the same as the process of step SB4 (see FIG. 4) in the embodiment 1.

When the process of step SC9 is finished or when the Mahalanobis distance MD is determined, in step SC8, to be equal to or less than the threshold, whether or not the shovel is in the stopped state is determined in step SC10. When the shovel is in the stopped state, the process is finished. When the shovel is not in the stopped state, the process waits for a predetermined time in step SC11. Then, the process returns to step SC1.

In the embodiment 2, the Mahalanobis-Taguchi method is adopted as a method of determining whether or not an operation state is abnormal. Thus, it is unnecessary to set the allowable range to each detection value of the sensors 34.

In the embodiment 1 described above, the allowable range of the detection value is set based on cases where the abnormality occurred in the past or the like, for example. Thus, there is a possibility that a new abnormality which has not occurred in the past may not be detected in some cases. However, by adopting the Mahalanobis-Taguchi method, it is unnecessary to set the allowable range of the detection value based on cases in the past. Therefore, it is possible to detect a new abnormality which has not occurred in the past.

Furthermore, deviation amounts of the plurality of detection values with respect to allowed values are integrated into the Mahalanobis distance (MD) in the embodiment 2, and thus it is possible to easily determine whether or not the operation is abnormal.

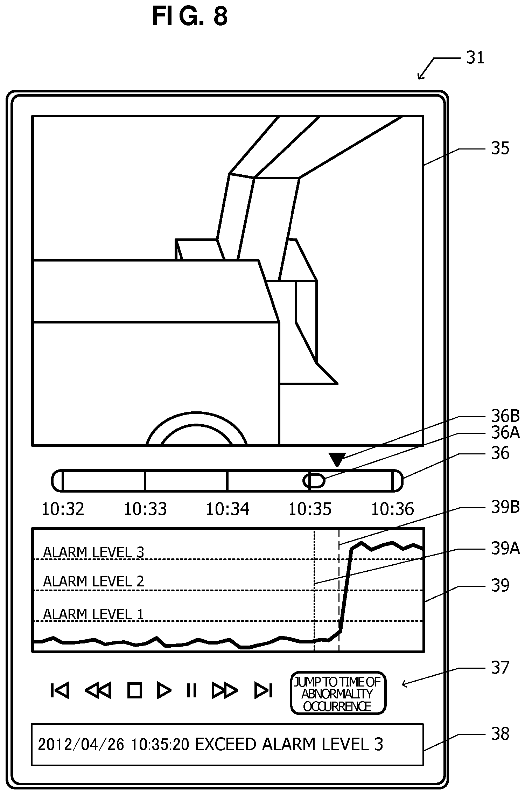

FIG. 8 shows an example of an image displayed on the output device 31 (see FIG. 2) when the cause of abnormality is searched for in the shovel according to the embodiment 2. Hereinafter, differences between the embodiment 2 and the embodiment 1 shown in FIG. 5 will be described. Besides the image display window 35, the progress status bar 36, the operating icon 37 and the character information display window 38, a window 39 for displaying an alarm level variation is shown in the embodiment 2. A variation graph of alarm levels with the elapsed time corresponding to a time range specified by the slider 36A is displayed in the window 39 for displaying the alarm level variation. A display image time line 39A is displayed in the window 39 for displaying alarm level variation at a position corresponding to the time (the time corresponding to the displayed image) specified by the slider 36A. Furthermore, an abnormality occurrence time line 39B is displayed in the window 39 for displaying the alarm level variation at a position corresponding to the mark 36B for indicating abnormality occurrence time. The alarm level shows the level of possibility that an abnormality is occurring in the shovel. The Mahalanobis distance calculated in step SC7 (see FIG. 6) is adopted as the alarm level. It is conceived that any cause of abnormality is generated immediately before the alarm level is increased rapidly.

[Embodiment 3]

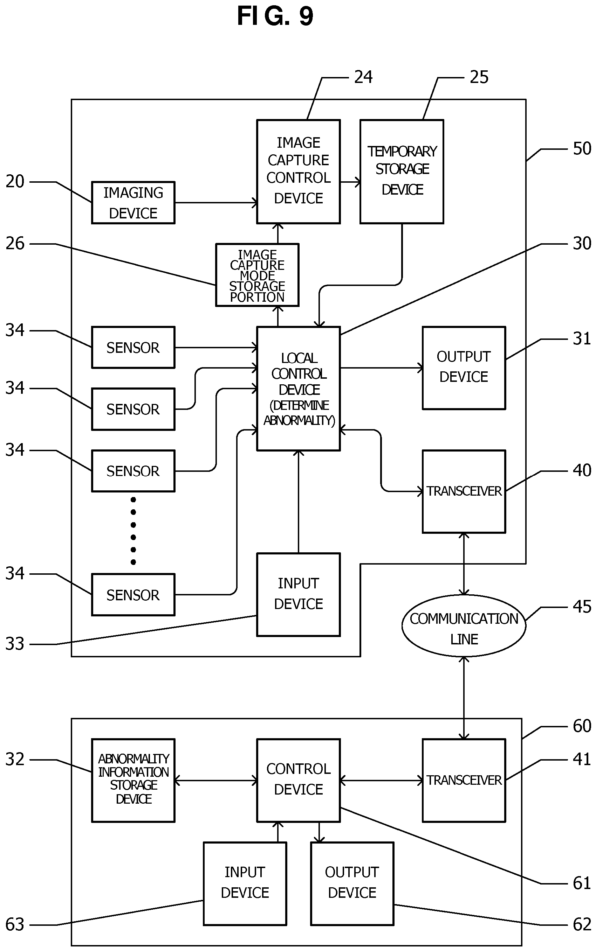

FIG. 9 shows a functional block diagram of a shovel and a monitoring device according to an embodiment 3. Hereinafter, a description focuses on differences between the shovel of the embodiment 3 and the shovel of the embodiment 1. A description of the same configuration will not be repeated.

In the embodiment 1, an abnormality determination process and the accumulation process of data when the abnormality occurs are completed only in the shovel. In the embodiment 2, the abnormality determination process is carried out by the local control device 30 mounted on a shovel 50. The image data and the like when the operation is determined to be abnormal are accumulated in a monitoring device 60. A transceiver 40 which transmits various data, such as image data, to the monitoring device 60 via a communication line 45 is mounted on the shovel 50.

A transceiver 41, a control device 61, an output device 62, an input device 63 and the abnormality information storage device 32 are provided in the monitoring device 60. The transceiver 41 receives data sent from the shovel 50 via the communication line 45. The control device 61 controls the output device 62, the input device 63 and the abnormality information storage device 32.

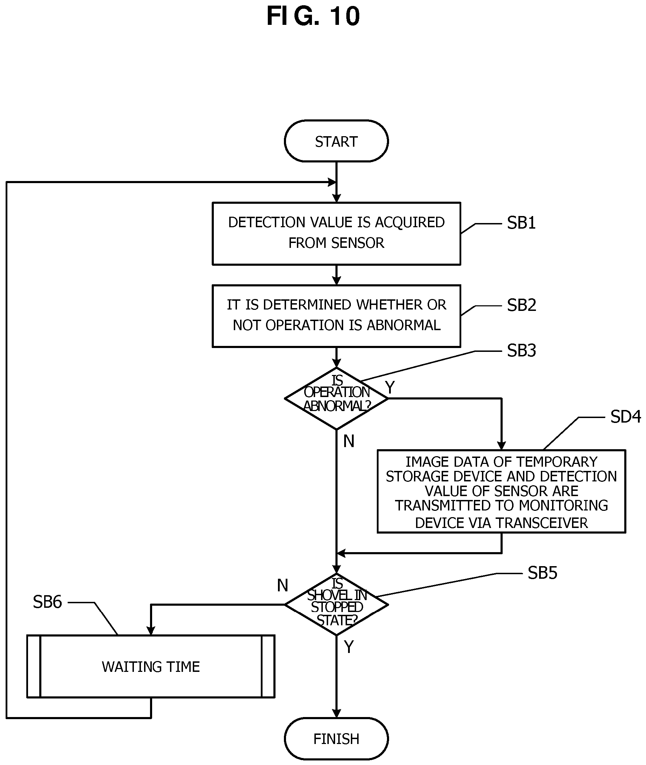

FIG. 10 shows a flowchart of a process performed by the local control device 30 mounted on the shovel 50. Steps SB1, SB2, SB3, SB5, and SB6 are, respectively, the same as steps SB1, SB2, SB3, SB5, and SB6 of the embodiment 1 shown in FIG. 4. The process of step SD4 is executed instead of step SB4 in the embodiment 1. Hereinafter, step SD4 will be described.

When the operation state is determined, in step SB3, to be abnormal, the local control device 30 waits until the second time following the determination time such that image data is accumulated in the temporary storage device 25. The image data corresponding to a period from the first time prior to a time at which the operation is determined to be abnormal to the second time, out of the image data stored in the temporary storage device 25, and the detection values of the sensors 34 when the operation is determined to be abnormal are transmitted from the transceiver 40 to the monitoring device 60. Instead, the image data corresponding to a period from the first time prior to the time at which the operation is determined to be abnormal to the time at which the operation is determined to be abnormal, out of the image data stored in the temporary storage device 25, may be transmitted. Furthermore, an alarm is raised from the output device 31, whereby the abnormality is notified to an operator.

Subsequently, a process of the control device 61 of the monitoring device 60 will be described. When the image data corresponding to a period before and after the time at which the operation state is determined to be abnormal and the detection values of the sensors are received from the shovel 50, the control device 61 stores the received image data in the abnormality information storage device 32. At the same time, an alarm is raised from the output device 62.

When an observer of the monitoring device 60 commands a data display via the input device 63, the control device 61 outputs the detection values of the sensor and the image data, which are accumulated in the abnormality information storage device 32, to the output device 62. The image data corresponding to a period before and after the time at which the operation is determined to be abnormal becomes useful information when an observer specifies the cause of abnormality. The image displayed on the output device 62 is the same as the image output on the output device 31 according to the embodiment 1 shown in FIG. 5 or the image output on the output device 31 according to the embodiment 2 shown in FIG. 8.

[Embodiment 4]

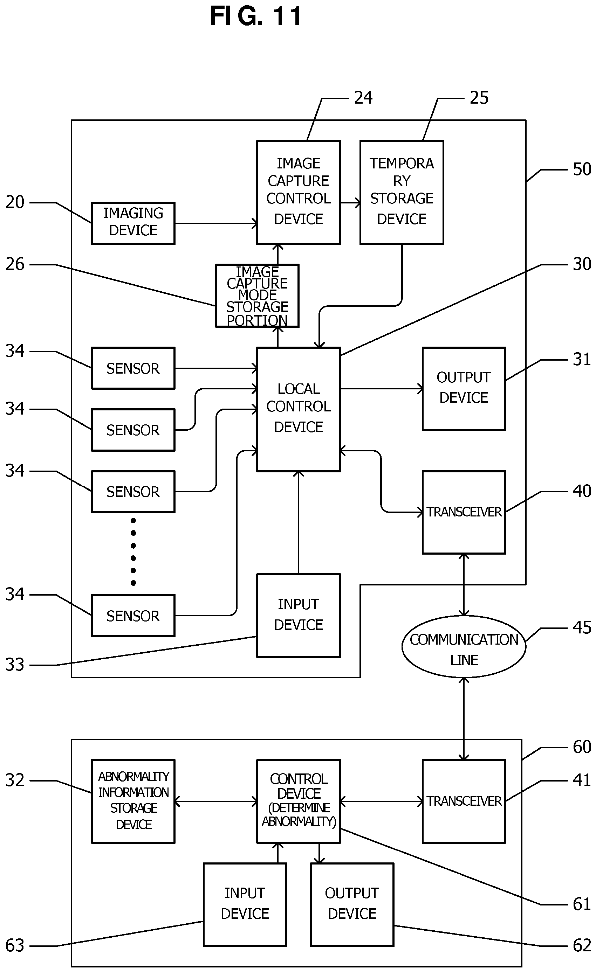

FIG. 11 is a functional block diagram of a shovel and a monitoring device according to an embodiment 4. Hereinafter, a description focuses on differences of the shovel and the monitoring device between the embodiment 4 and the embodiment 3. A description of the same configuration will not be repeated.

The local control device 30 mounted on the shovel 50 carries out the abnormality determination process in the embodiment 3. However, the control device 61 mounted on the monitoring device 60 carries out the abnormality determination process in the embodiment 4. The shovel 50 transmits an abnormality determination request as well as the detection values of the sensor 34 to the monitoring device 60 at predetermined cycles.

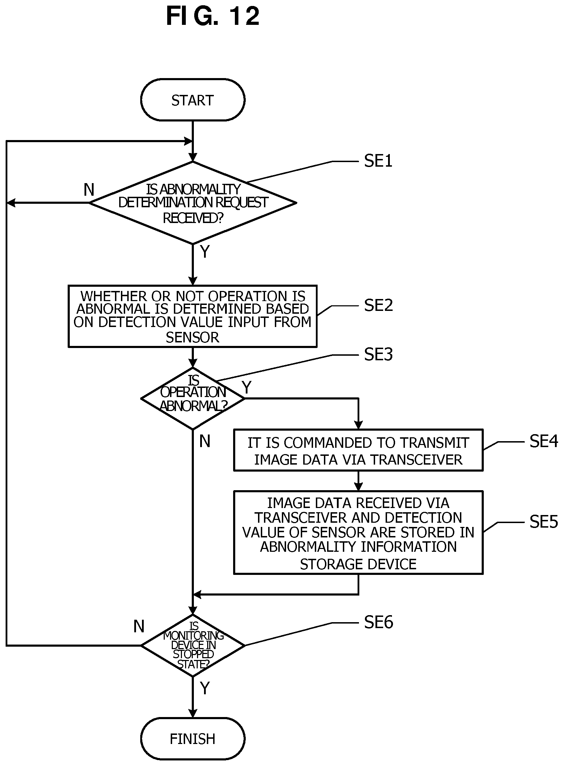

FIG. 12 shows a flowchart of a process performed by the control device 61 of the monitoring device 60. Whether or not the abnormality determination request is received from the shovel 50 is determined in step SE1. When the abnormality determination request is not received, step SE1 is repeated until the abnormality determination request is received.

When the abnormality determination request is received, the abnormality determination is performed in step SE2, based on the detection value of the sensor which is received from the shovel 50. The abnormality determination process is the same as the abnormality determination process of steps SB2 and SB3 (see FIG. 4) according to the embodiment 1 or steps SC7 and SC8 (see FIG. 6) according to the embodiment 2.

When the operation state is determined to be abnormal in step SE3, it is commanded, in step SE4, that shovel 50 transmits the image data. This command includes a start time (the first time) and a finish time (the second time) of the image data to be transmitted. When receiving the transmission command of the image data, the shovel 50 transmits the image data corresponding to a period from the first time to the second time, out of the image data accumulated in the temporary storage device 25, to the monitoring device 60 as a response to the command. In addition, it is preferable to perform a data compression of the image data before transmission.

In step SE5, the image data received from the shovel 50 and the detection values of the sensor at the time when the operation is determined to be abnormal are stored in the abnormality information storage device 32 in a state of being associated with each other. When a process of step SE5 is finished, whether or not the operation of the monitoring device 60 is in a stopped state is determined in step SE6. Whether or not the operation of the monitoring device 60 is in a stopped state is determined in step SE6, even when the operation is determined, in step SE3, not to be abnormal.

When the monitoring device 60 is determined, in step SE6, not to be in a stopped state, the process returns to step SE1. When the monitoring device 60 is determined to be in a stopped state, the process is finished.

To specify the cause of the abnormality, an observer of the monitoring device 60 can use the image corresponding to a period before and after the time of the detected abnormality which is displayed on the output device 62, even in the case of the embodiment 4. The image displayed on the output device 62 is the same as the image output on the output device 31, according to the embodiment 1 shown in FIG. 5, or the image output on the output device 31, according to the embodiment 2 shown in FIG. 8.

Although the invention is described with reference to the embodiments described above, it is not limited thereto. For example, it is apparent to those skilled in the art that the invention can be modified, improved, combined, or the like in various ways, within the scope of the appended claims.

**Claims**

1. A shovel comprising:

   an imaging device (20, 20F, 20R, 20L, 20B);
   a temporary storage device (25) that is adapted to temporarily store image data acquired by the imaging device (20, 20F, 20R, 20L, 20B);
   a plurality of sensors (34) that are each adapted to detect a plurality of physical quantities relating to an operation state of the shovel;
   a transmitter (40) for transmitting the data, and
   a control device (30) that is adapted to perform an operation abnormality determination based on detection values detected by the sensors (34), and to transmit the image data stored in the temporary storage device (25), which corresponds to a period from a first time prior to a time at which an operation is determined to be abnormal to at least the time at which the operation is determined to be abnormal, from the transmitter (40) when the operation is determined to be abnormal.

2. The shovel according to Claim 1,
   wherein the control device (30) is adapted to transmit the detection values detected by the sensors (34) at the time at which the operation is determined to be abnormal as well as the image data from the transmitter (40).

3. The shovel according to Claim 1 or 2,
   wherein the control device (30) is adapted to additionally transmit the image data, which corresponds to a period until a second time following the time at which the operation is determined to be abnormal, from the transmitter (40) when the operation is determined to be abnormal.

4. The shovel according to any one of Claims 1 to 3,

   wherein the control device (30) is adapted to
   acquire the detection values detected by the plurality of sensors (34) during a normal operation, and to decide a unit space which is used in Mahalanobis-Taguchi method, based on the acquired detection values,
   calculate a Mahalanobis distance from the center of the unit space to detection values of an evaluation-target acquired by the plurality of sensors (34), and
   perform the operation abnormality determination of an operation based on the calculated Mahalanobis distance.

5. A monitoring device (60) for a shovel, comprising:

   a transceiver (41) that is adapted to receive a plurality of detection values detected by sensors (34) for detecting a plurality of physical quantities relating to an operation state of the shovel and image data acquired by an imaging device (20, 20F, 20R, 20L, 20B) installed on the shovel and to transmit a command to the shovel;
   an abnormality information storage device (32); and
   a control device (61),
   wherein the control device (61) is adapted to determine whether or not an operation is abnormal based on the detection values which are detected by the sensors (34) and input from the transceiver (41), and the control device (61) is adapted to transmit a command instructing transmission of image data, which corresponds to a period from a first time prior to a time at which the operation is determined to be abnormal to at least the time at which the operation is determined to be abnormal, to the shovel via the transceiver (41) when the operation is determined to be abnormal, and
wherein the control device (61) is adapted to store the image data which is transmitted from the shovel to the transceiver (41) in the abnormality information storage device (32) in response to the command.

6. The monitoring device for a shovel according to Claim 5, further comprising:

an output device (62) for displaying an image,
wherein the control device (61) is adapted to
display a time indicator for an operator to specify a time on the output device (62), and
display the image data at the time specified by the time indicator, out of the image data stored in the abnormality information storage device (32), on the output device (62) as an image.

7. The monitoring device for a shovel according to Claim 6,
wherein the control device (61) is adapted to display information about the time range within which a time can be specified on the time indicator and to display a temporal variation of alarm levels on the output device (62), corresponding to the time range displayed on the time indicator.

**Patentansprüche**

1. Schaufelbagger, umfassend:

eine Bildgebungsvorrichtung (20, 20F, 20R, 20L, 20B);
eine temporäre Speichervorrichtung (25), die dazu ausgelegt ist, Bilddaten, die von der Bildgebungsvorrichtung (20, 20F, 20R, 20L, 20B) erfasst werden, temporär zu speichern;
eine Vielzahl von Sensoren (34), die jeweils so ausgelegt sind, dass sie eine Vielzahl von physikalischen Größen erfassen, die sich auf einen Betriebszustand des Schaufelbaggers beziehen;
einen Sender (40) zum Senden der Daten und
eine Steuervorrichtung (30), die dazu ausgelegt ist, eine Betriebsanomaliebestimmung auf der Grundlage von durch die Sensoren (34) erfassten Erfassungswerten durchzuführen und die in der temporären Speichervorrichtung (25) gespeicherten Bilddaten, die einem Zeitraum von einem ersten Zeitpunkt vor einem Zeitpunkt, zu dem ein Betrieb als abnormal bestimmt wird, bis mindestens zu dem Zeitpunkt, zu dem der Betrieb als abnormal bestimmt wird, entsprechen, von dem Sender (40) zu übertragen, wenn der Betrieb als abnormal bestimmt wird.

2. Schaufelbagger nach Anspruch 1,
wobei die Steuervorrichtung (30) so eingerichtet ist, dass sie die von den Sensoren (34) erfassten Erfassungswerte zu dem Zeitpunkt, zu dem der Betrieb als abnormal bestimmt wird, sowie die Bilddaten von dem Sender (40) überträgt.

3. Schaufelbagger nach Anspruch 1 oder 2,
wobei die Steuervorrichtung (30) so eingerichtet ist, dass sie zusätzlich die Bilddaten, die einem Zeitraum bis zu einem zweiten Zeitpunkt nach dem Zeitpunkt entsprechen, zu dem der Betrieb als abnormal bestimmt wird, von dem Sender (40) überträgt, wenn der Betrieb als abnormal bestimmt wird.

4. Schaufelbagger nach einem der Ansprüche 1 bis 3,

wobei die Steuervorrichtung (30) ausgelegt ist zum
Erfassen der von der Vielzahl von Sensoren (34) während eines normalen Betriebs erfassten Erfassungswerte und Bestimmen eines Einheitsraums, der im Mahalanobis-Taguchi-Verfahren verwendet wird, auf der Grundlage der erfassten Erfassungswerte,
Berechnen eines Mahalanobis-Abstands von der Mitte des Einheitsraums zu Erfassungswerten eines durch die Vielzahl von Sensoren (34) erfassten Bewertungsziels, und
Durchführen der Betriebsanomaliebestimmung eines Betriebs basierend auf dem berechneten Mahalanobis-Abstand.

5. Überwachungsvorrichtung (60) für einen Schaufelbagger, umfassend:

einen Transceiver (41), der eingerichtet ist zum Empfangen einer Vielzahl von Erfassungswerten, die von Sensoren (34) erfasst werden, zum Erfassen einer Vielzahl von physikalischen Größen, die sich auf einen Betriebszustand des Schaufelbaggers beziehen, und von Bilddaten, die von einer Bildgebungsvorrichtung (20, 20F, 20R, 20L, 20B) erfasst werden, die an der Schaufelbagger installiert ist, und zum Senden eines Befehls an den Schaufelbagger;

eine Abnormalitätsinformationsspeichervorrichtung (32); und

ein Steuergerät (61),

wobei das Steuergerät (61) dazu ausgelegt ist, auf der Grundlage der von den Sensoren (34) erfassten und von dem Transceiver (41) eingegebenen Erfassungswerte zu bestimmen, ob ein Vorgang abnormal ist oder nicht, und wobei das Steuergerät (61) dazu ausgelegt ist, einen Befehl, der die Übertragung von Bilddaten, die einem Zeitraum von einem ersten Zeitpunkt vor einem Zeitpunkt, zu dem der Vorgang als abnormal bestimmt wird, bis mindestens zu dem Zeitpunkt, zu dem der Vorgang als abnormal bestimmt wird, entsprechen, über den Transceiver (41) an den Schaufelbagger zu übertragen, wenn der Vorgang als abnormal bestimmt wird, und wobei die Steuervorrichtung (61) so eingerichtet ist, dass sie die Bilddaten, die von der Schaufelbagger an den Transceiver (41) übertragen werden, ansprechend auf den Befehl in der Abnormalitätsinformationsspeichervorrichtung (32) speichert.

6. Überwachungsvorrichtung für einen Schaufelbagger gemäß Anspruch 5, ferner umfassend:

eine Ausgabevorrichtung (62) zum Anzeigen eines Bildes,

wobei die Steuervorrichtung (61) eingerichtet zum

Anzeigen eine Zeitanzeige, damit ein Bediener eine Zeit auf der Ausgabevorrichtung (62) angeben kann, und Anzeigen der Bilddaten zu der durch die Zeitanzeige angegebenen Zeit aus den in der Abnormalitätsinformationsspeichervorrichtung (32) gespeicherten Bilddaten auf der Ausgabevorrichtung (62) als ein Bild.

7. Überwachungsvorrichtung für einen Schaufelbagger nach Anspruch 6, wobei die Steuervorrichtung (61) so eingerichtet ist, dass sie Informationen über den Zeitbereich anzeigt, innerhalb dessen eine Zeit auf der Zeitanzeige angegeben werden kann, und eine zeitliche Änderung von Alarmstufen auf der Ausgabevorrichtung (62) anzeigt, die dem auf der Zeitanzeige angezeigten Zeitbereich entspricht.

**Revendications**

1. Une pelleteuse comprenant :

un dispositif d'imagerie (20, 20F, 20R, 20L, 20B) ;

un dispositif de stockage temporaire (25) adapté pour stocker temporairement les données d'image acquises par le dispositif d'imagerie (20, 20F, 20R, 20L, 20B) ;

une pluralité de capteurs (34) qui sont chacun adaptés pour détecter une pluralité de quantités physiques relatives à un état de fonctionnement de la pelleteuse ;

un émetteur (40) pour transmettre les données, et

un dispositif de commande (30) adapté pour effectuer une détermination d'anomalie de fonctionnement sur la base des valeurs de détection détectées par les capteurs (34), et pour transmettre les données d'image stockées dans le dispositif de stockage temporaire (25), qui correspondent à une période allant d'un premier moment avant un moment où un fonctionnement est déterminé comme anormal à au moins le moment où le fonctionnement est déterminé comme anormal, à partir de l'émetteur (40) lorsque le fonctionnement est déterminé comme anormal.

2. Pelleteuse selon la revendication 1, dans laquelle le dispositif de commande (30) est adapté pour transmettre les valeurs de détection détectées par les capteurs (34) au moment où l'opération est jugée anormale ainsi que les données d'image à partir de l'émetteur (40).

3. Pelleteuse selon la revendication 1 ou 2, dans laquelle le dispositif de commande (30) est adapté pour transmettre en outre les données d'image, qui correspondent à une période allant jusqu'à un deuxième moment suivant le moment où l'opération est jugée anormale, à partir de l'émetteur (40) lorsque l'opération est jugée anormale.

4. Pelleteuse selon l'une des revendications 1 à 3,

dans laquelle le dispositif de commande (30) est adapté pour

acquérir les valeurs de détection détectées par la pluralité de capteurs (34) au cours d'un fonctionnement normal, et décider d'un espace unitaire utilisé dans la méthode Mahalanobis-Taguchi, sur la base des valeurs de détection acquises,

calculer une distance de Mahalanobis entre le centre de l'espace unitaire et les valeurs de détection d'une cible d'évaluation acquises par la pluralité de capteurs (34), et

effectuer la détermination de l'anomalie d'une opération sur la base de la distance de Mahalanobis calculée.

5. Dispositif de surveillance (60) pour une pelleteuse, comprenant :

un émetteur-récepteur (41) adapté pour recevoir une pluralité de valeurs de détection détectées par des capteurs (34) pour détecter une pluralité de quantités physiques relatives à un état de fonctionnement de la pelleteuse et des données d'image acquises par un dispositif d'imagerie (20, 20F, 20R, 20L, 20B) installé sur la pelleteuse et pour transmettre une commande à la pelleteuse ;

un dispositif de stockage d'informations sur les anomalies (32) ; et

un dispositif de contrôle (61),

dans lequel le dispositif de contrôle (61) est adapté pour déterminer si une opération est anormale ou non sur la base des valeurs de détection qui sont détectées par les capteurs (34) et de l'entrée de l'émetteur-récepteur (41), et le dispositif de contrôle (61) est adapté pour transmettre une commande ordonnant la transmission de données d'image, qui correspond à une période allant d'un premier moment avant le moment où l'opération est jugée anormale à au moins le moment où l'opération est jugée anormale, à la pelleteuse par l'intermédiaire de l'émetteur-récepteur (41) lorsque l'opération est jugée anormale, et

dans lequel le dispositif de commande (61) est adapté pour stocker les données d'image transmises de la pelleteuse à l'émetteur-récepteur (41) dans le dispositif de stockage des informations d'anomalie (32) en réponse à la commande.

6. Dispositif de surveillance d'une pelleteuse selon la revendication 5, comprenant en outre

un dispositif de sortie (62) pour afficher une image,

dans lequel le dispositif de commande (61) est adapté pour afficher un indicateur de temps pour permettre à un opérateur de spécifier un temps sur le dispositif de sortie (62), et

afficher les données d'image au moment spécifié par l'indicateur de temps, à partir des données d'image stockées dans le dispositif de stockage d'informations sur les anomalies (32), sur le dispositif de sortie (62) sous la forme d'une image.

7. Dispositif de surveillance d'une pelleteuse selon la revendication 6,

dans lequel le dispositif de commande (61) est adapté pour afficher des informations sur la plage de temps dans laquelle un temps peut être spécifié sur l'indicateur de temps et pour afficher une variation temporelle des niveaux d'alarme sur le dispositif de sortie (62), correspondant à la plage de temps affichée sur l'indicateur de temps.

# FIG. 1A

# FIG. 1B

# FIG. 2

# FIG. 3

```
                    ┌─────────────┐
                    │    START    │
                    └──────┬──────┘
                           │
        ┌──────────────────┤
        │                  ▼
        │      ┌──────────────────────────┐
        │      │  IMAGE DATA FROM IMAGING │────── SA1
        │      │ DEVICE IS STORED IN      │
        │      │  TEMPORARY STORAGE DEVICE│
        │      └──────────────┬───────────┘
        │                     ▼
        │      ┌──┬───────────────────┬──┐
        │      │  │   WAITING TIME    │  │────── SA2
        │      └──┴───────────────────┴──┘
        │                     ▼
        │                ╱─────────╲
        │      N        ╱    IS     ╲
        └──────────────◄   SHOVEL    ►────── SA3
                        ╲ IN STOPPED ╱
                         ╲  STATE?  ╱
                          ╲───┬───╱
                              │ Y
                              ▼
                       ┌─────────────┐
                       │   FINISH    │
                       └─────────────┘
```

# FIG. 4

START

DETECTION VALUE IS ACQUIRED FROM SENSOR — SB1

IT IS DETERMINED WHETHER OR NOT OPERATION IS ABNORMAL — SB2

SB3
IS OPERATION ABNORMAL?

Y

N

IMAGE DATA IS TRANSMITTED FROM TEMPORARY STORAGE DEVICE TO ABNORMALITY INFORMATION STORAGE DEVICE, AND DETECTION VALUE OF SENSOR IS STORED IN ABNORMALITY INFORMATION STORAGE DEVICE — SB4

SB6 — WAITING TIME

N

IS SHOVEL IN STOPPED STATE? — SB5

Y

FINISH

# FIG. 5

31

35

36B
36A
36

10:32    10:33    10:34    10:35    10:36

JUMP TO TIME
OF ABNORMALITY
OCCURENCE

37

2012/04/26 10:35:20 ABNORMALITY IS DETECTED

38

**FIG. 6**

START

DETECTION VALUE IS ACQUIRED FROM SENSOR —— SC1

IS UNIT SPACE DEFINED? —— SC2

Y

N

DETECTION VALUE IS ACCUMULATED AS SAMPLE —— SC3

N

IS THE NUMBER OF SAMPLES ENOUGH? —— SC4

Y

UNIT SPACE IS DEFINED —— SC5

UNIT SPACE DEFINING FLAG IS SET —— SC6

MAHALANOBIS DISTANCE (MD) IS CALCULATED —— SC7

MD>THRESHOLD? —— SC8

Y

N

IMAGE DATA IS TRANSMITTED FROM TEMPORARY STORAGE DEVICE TO ABNORMALITY INFORMATION STORAGE DEVICE, AND DETECTION VALUE OF SENSOR IS STORED IN ABNORMALITY INFORMATION STORAGE DEVICE —— SC9

IS SHOVEL IN STOPPED STATE? —— SC10

N

Y

SC11 —— WAITING TIME

FINISH

# FIG. 7

| SAMPLE NUMBER | PHYSICAL QUANTITY 1 | PHYSICAL QUANTITY 2 | · · · | PHYSICAL QUANTITY k | · · · | PHYSICAL QUANTITY K |
|---|---|---|---|---|---|---|
| 1 | x(1,1) | x(1,2) | · · · | x(1,k) | · · · | x(1,K) |
| 2 | x(2,1) | x(2,2) | · · · | x(2,k) | · · · | x(2,K) |
| 3 | x(3,1) | x(3,2) | · · · | x(3,k) | · · · | x(3,K) |
| · | · | · | | · | | · |
| n | x(n,1) | x(n,2) | · · · | x(n,k) | · · · | x(n,K) |
| · | · | · | | · | | · |
| N | x(N,1) | x(N,2) | · · · | x(N,k) | · · · | x(N,K) |
| MEAN VALUE | m(1) | m(2) | · · · | m(k) | · · · | m(K) |
| STANDARD DEVIATION | σ(1) | σ(2) | · · · | σ(k) | · · · | σ(K) |

**FIG. 8**

10:32    10:33    10:34    10:35    10:36

ALARM LEVEL 3

ALARM LEVEL 2

ALARM LEVEL 1

JUMP TO TIME OF ABNORMALITY OCCURRENCE

2012/04/26 10:35:20 EXCEED ALARM LEVEL 3

# FIG. 9

# FIG. 10

START

DETECTION VALUE IS ACQUIRED FROM SENSOR —— SB1

IT IS DETERMINED WHETHER OR NOT OPERATION IS ABNORMAL —— SB2

SB3

IS OPERATION ABNORMAL?

Y

N

SD4

IMAGE DATA OF TEMPORARY STORAGE DEVICE AND DETECTION VALUE OF SENSOR ARE TRANSMITTED TO MONITORING DEVICE VIA TRANSCEIVER

SB5

IS SHOVEL IN STOPPED STATE?

N

SB6

WAITING TIME

Y

FINISH

# FIG. 11

# FIG. 12

```
                    ┌──────────┐
                    │  START   │
                    └──────────┘
                         │
         ┌───────────────┤
         │               ▼
         │          ╱ IS ABNORMALITY ╲        ── SE1
       N │◄────── ╱ DETERMINATION REQUEST ╲
         │         ╲    RECEIVED?    ╱
         │           ╲             ╱
         │                 │ Y
         │                 ▼
         │      ┌─────────────────────────┐
         │      │ WHETHER OR NOT OPERATION IS │   ── SE2
         │      │ ABNORMAL IS DETERMINED BASED │
         │      │ ON DETECTION VALUE INPUT FROM │
         │      │         SENSOR            │
         │      └─────────────────────────┘
         │                 │
         │                 ▼          ── SE3
         │             ╱   IS   ╲   Y
         │           ╱ OPERATION ╲─────────┐
         │            ╲ ABNORMAL? ╱        │
         │              ╲       ╱          ▼
         │                │ N     ┌──────────────────────┐
         │                │       │ IT IS COMMANDED TO TRANSMIT │  ── SE4
         │                │       │ IMAGE DATA VIA TRANSCEIVER │
         │                │       └──────────────────────┘
         │                │                 │
         │                │                 ▼
         │                │       ┌──────────────────────┐
         │                │       │ IMAGE DATA RECEIVED VIA │
         │                │       │ TRANSCEIVER AND DETECTION │  ── SE5
         │                │       │ VALUE OF SENSOR ARE STORED IN │
         │                │       │ ABNORMALITY INFORMATION │
         │                │       │   STORAGE DEVICE      │
         │                │       └──────────────────────┘
         │                │                 │
         │                ▼◄────────────────┘
         │          ╱   IS    ╲              ── SE6
       N │◄─────── ╱ MONITORING ╲
         │          ╲ DEVICE IN ╱
         └──────────  ╲ STOPPED ╱
                       ╲ STATE? ╱
                          │ Y
                          ▼
                    ┌──────────┐
                    │  FINISH  │
                    └──────────┘
```

**EP 3 599 314 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002332664 A
- JP 2005113397 A
- JP 2000096630 A
- WO 2004038643 A2